# EUROPEAN PATENT SPECIFICATION

(11) **EP 3 061 194 B1**
(45) Date of publication and mention of the grant of the patent: **27.06.2018**
(21) Application number: 14855042.9
(22) Date of filing: 17.10.2014
(51) Int. Cl.: H04L 5/00

(54) **IMPLEMENTATION OF EFFICIENT INTER-BAND CARRIER AGGREGATION**
REALISIERUNG EFFIZIENTER INTER-BAND-TRÄGERAGGREGATION
REALISATION D'UNE AGRÉGATION EFFICACE DE PORTEUSES INTER-BANDE

(30) Priority: 21.10.2013 US 201361893657 P; 24.01.2014 US 201461931222 P; 21.08.2014 US 201414465799
(43) Date of publication of application: 31.08.2016
(73) Proprietor: Samsung Electronics Co., Ltd., Suwon-si, Gyeonggi-do 443-742 (KR)
(72) Inventor: LOH, Lup Meng, Collin County, Texas 75025 (US)
(74) Representative: HGF Limited
(86) International application number: PCT/KR2014/009798
(87) International publication number: WO 2015/060591

(56) References cited:
- KR-A- 20120 030 919
- US-A1- 2012 281 597
- US-A1- 2012 308 238
- US-A1- 2012 329 407
- US-A1- 2013 114 578
- US-A1- 2013 217 398
- US-A1- 2013 231 064
- US-A1- 2013 252 603
- ZTE: "RF front-end architecture discussion for CA applications", 3GPP DRAFT; R4-131144 , 8 April 2013 (2013-04-08), XP050701470, Retrieved from the Internet: URL:http://www.3gpp.org/ftp/tsg_ran/WG4_Ra dio/TSGR4_66bis/Docs/ [retrieved on 2013-04-08]

## Description

### Technical Field

This disclosure relates generally to wireless communication systems. More specifically, this disclosure relates to front end configurations supporting inter-band carrier aggregation.

### Background Art

Carrier aggregation (CA) is the use of two or more component carriers in allocating downlink (DL) or uplink (UL) resources. CA is useful in improving spectral efficiency, bandwidth, and ultimately data rate. The component carriers allocated for CA can be within the same frequency band (e.g. Evolved Universal Terrestrial Radio Access (E-UTRA)operating bands) i.e., intra-band CA or in separate frequency bands i.e., inter-band CA. The 3GPP-document: ZTE: "RF front-end architecture discussion for CA applications", 3GPP DRAFT; R4-131144, 8 April 2013 (2013-04-08) discloses the implementation of such CA techniques.

For closely spaced inter-band CA(e.g., Bands 2 and 4 or Bands 4 and 30), current front end (FE) configurations supporting carrier aggregation (CA) use quadplexers and multi-throwradio frequency (RF) switches to support the various combinations of bands and modes of operations. While such brute force approaches may provide a short term solution, they are laden with inefficiencies. High insertion losses in both uplink and downlink come with such FE configuration approaches. Additionally, the limited isolation achievable with quadplexers may require for additional filters, which add losses or increase receiver linearity, which increases power consumption. 3GPP Standards contributions to support closely spaced inter-band CA are calling for relaxed specifications to accommodate the additional losses, which result in poor sensitivity performance.

### Disclosure of Invention

### Solution to Problem

Embodiments of the present disclosure provide front end configurations supporting inter-band carrier aggregation.

In one embodiment, an apparatus supporting carrier aggregation is provided according to independent claim 1.

In another embodiment, a method for supporting carrier aggregation is provided according to independent claim 4.

In yet another embodiment, a user equipment (UE) capable of supporting downlink carrier aggregation is provided according to independent claim 8.

Other preferred embodiments are provided in the dependent claims.

Other technical features may be readily apparent to one skilled in the art from the following figures, descriptions, and claims. The present invention is defined and limited only by the scope of the appended claims. In the following, any embodiment(s) referred to and not falling within the scope of said appended claims is (are) to be interpreted as example(s) useful for understanding the present invention.

Before undertaking the DETAILED DESCRIPTION below, it may be advantageous to set forth definitions of certain words and phrases used throughout this patent document. The term "couple" and its derivatives refer to any direct or indirect communication between two or more elements, whether or not those elements are in physical contact with one another. The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, means to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" means any device, system or part thereof that controls at least one operation. Such a controller may be implemented in hardware or a combination of hardware and software and/or firmware. The functionality associated with any particular controller may be centralized or distributed, whether locally or remotely. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for other certain words and phrases are provided throughout this patent document. Those of ordinary skill in the art should understand that in many if not most instances, such definitions apply to prior as well as future uses of such defined words and phrases.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### Brief Description of Drawings

For a more complete understanding of the present disclosure and its advantages, reference is now made to the following description taken in conjunction with the accompanying drawings, in which like reference numerals represent like parts:
FIGURE 1 illustrates an example wireless system which transmits according to illustrative embodiments of this disclosure;
FIGURE 2 illustrates a high-level diagram of an orthogonal frequency division multiple access transmit path according to illustrative embodiments of this disclosure;
FIGURE 3 illustrates a high-level diagram of an orthogonal frequency division multiple access receive path according to illustrative embodiments of this disclosure;
FIGURE 4 illustrates anFE configuration for supporting CA according to an illustrative embodiment of this disclosure;
FIGURE 5 illustrates another FE configuration for supporting CA according to an illustrative embodiment of this disclosure; and
FIGURE 6 illustrates an example of wireless communication using closely spaced inter-band CA according to an illustrative embodiment of this disclosure.

### Best Mode for Carrying out the Invention

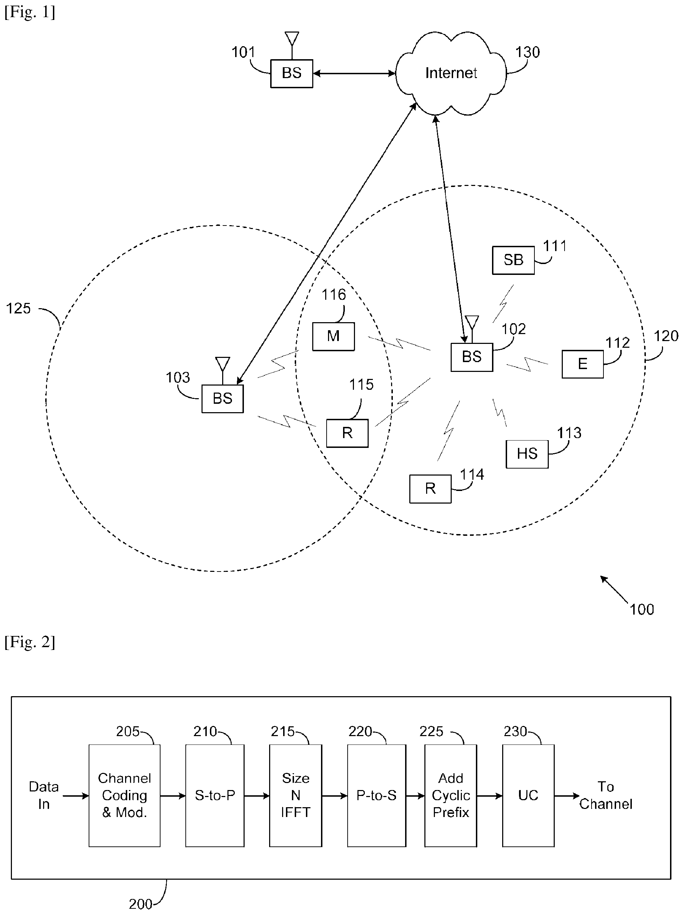

FIGURES 1 through 6, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably-arranged system or device. The present invention is defined and limited only by the scope of the appended claims.

FIGURES 1-3 below describe various embodiments implemented in wireless communications systems and with the use of OFDM or OFDMA communication techniques. The description of FIGURES 1-3 is not meant to imply physical or architectural limitations to the manner in which different embodiments may be implemented. Different embodiments of the present disclosure may be implemented in any suitably-arranged communications system.

FIGURE 1 illustrates exemplary wireless system 100, which transmits messages according to the principles of the present disclosure. In the illustrated embodiment, wireless system 100 includes transmission points (e.g., an Evolved Node B (eNB), Node B), such as base station (BS) 101, base station (BS) 102, base station (BS) 103, and other similar base stations or relay stations (not shown). Base station 101 is in communication with base station 102 and base station 103. Base station 101 is also in communication with Internet 130 or a similar IP-based system (not shown).

Base station 102 provides wireless broadband access (via base station 101) to Internet 130 to a first plurality of user equipment (e.g., mobile phone, mobile station, subscriber station) within coverage area 120 of base station 102. The first plurality of user equipment includes user equipment 111, which may be located in a small business (SB); user equipment 112, which may be located in an enterprise (E); user equipment 113, which may be located in a WiFi hotspot (HS); user equipment 114, which may be located in a first residence (R); user equipment 115, which may be located in a second residence (R); and user equipment 116, which may be a mobile device (M), such as a cell phone, a wireless laptop, a wireless PDA, or the like.

Base station 103 provides wireless broadband access (via base station 101) to Internet 130 to a second plurality of user equipment within coverage area 125 of base station 103. The second plurality of user equipment includes user equipment 115 and user equipment 116. In an exemplary embodiment, base stations 101-103 may communicate with each other and with user equipment 111-116 using OFDM or OFDMA techniques.

While only six user equipment are depicted in FIGURE 1, it is understood that wireless system 100 may provide wireless broadband access to additional user equipment. It is noted that user equipment 115 and user equipment 116 are located on the edges of both coverage area 120 and coverage area 125. User equipment 115 and user equipment 116 each communicate with both base station 102 and base station 103 and may be said to be operating in handoff mode, as known to those of skill in the art.

User equipment 111-116 may access voice, data, video, video conferencing, and/or other broadband services via Internet 130. In an exemplary embodiment, one or more of user equipment 111-116 may be associated with an access point (AP) of a WiFi WLAN. User equipment 116 may be any of a number of mobile devices, including a wireless-enabled laptop computer, personal data assistant, notebook, handheld device, or other wireless-enabled device. User equipment 114 and 115 may be, for example, a wireless-enabled personal computer (PC), a laptop computer, a gateway, or another device.

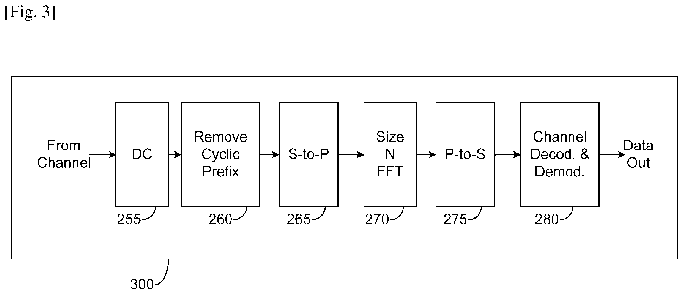

FIGURE 2 is a high-level diagram of transmit path circuitry 200. For example, the transmit path circuitry 200 may be used for an orthogonal frequency division multiple access (OFDMA) communication. FIGURE 3 is a high-level diagram of receive path circuitry 300. For example, the receive path circuitry 300 may be used for an orthogonal frequency division multiple access (OFDMA) communication. In FIGURES 2 and 3, for downlink communication, the transmit path circuitry 200 may be implemented in base station (BS) 102 or a relay station, and the receive path circuitry 300 may be implemented in a user equipment (e.g. user equipment 116 of FIGURE 1). In other examples, for uplink communication, the receive path circuitry 300 may be implemented in a base station (e.g. base station 102 of FIGURE 1) or a relay station, and the transmit path circuitry 200 may be implemented in a user equipment (e.g. user equipment 116 of FIGURE 1).

Transmit path circuitry 200 comprises channel coding and modulation block 205, serial-to-parallel (S-to-P) block 210, Size N Inverse Fast Fourier Transform (IFFT) block 215, parallel-to-serial (P-to-S) block 220, add cyclic prefix block 225, and up-converter (UC) 230. Receive path circuitry 300 comprises down-converter (DC) 255, remove cyclic prefix block 260, serial-to-parallel (S-to-P) block 265, Size N Fast Fourier Transform (FFT) block 270, parallel-to-serial (P-to-S) block 275, and channel decoding and demodulation block 280.

At least some of the components in FIGURES 2 and 3 may be implemented in software, while other components may be implemented by configurable hardware or a mixture of software and configurable hardware. In particular, it is noted that the FFT blocks and the IFFT blocks described in this disclosure document may be implemented as configurable software algorithms, where the value of Size N may be modified according to the implementation.

Furthermore, although this disclosure is directed to an embodiment that implements the Fast Fourier Transform and the Inverse Fast Fourier Transform, this is by way of illustration only and should not be construed to limit the scope of the disclosure. It will be appreciated that in an alternate embodiment of the disclosure, the Fast Fourier Transform functions and the Inverse Fast Fourier Transform functions may easily be replaced by Discrete Fourier Transform (DFT) functions and Inverse Discrete Fourier Transform (IDFT) functions, respectively. It will be appreciated that for DFT and IDFT functions, the value of the N variable may be any integer number (i.e., 1, 2, 3, 4, etc.), while for FFT and IFFT functions, the value of the N variable may be any integer number that is a power of two (i.e., 1, 2, 4, 8, 16, etc.).

In transmit path circuitry 200, channel coding and modulation block 205 receives a set of information bits, applies coding (e.g., LDPC coding) and modulates (e.g., Quadrature Phase Shift Keying (QPSK) or Quadrature Amplitude Modulation (QAM)) the input bits to produce a sequence of frequency-domain modulation symbols. Serial-to-parallel block 210 converts (i.e., de-multiplexes) the serial modulated symbols to parallel data to produce N parallel symbol streams where N is the IFFT/FFT size used in BS 102 and UE 116. Size N IFFT block 215 then performs an IFFT operation on the N parallel symbol streams to produce time-domain output signals. Parallel-to-serial block 220 converts (i.e., multiplexes) the parallel time-domain output symbols from Size N IFFT block 215 to produce a serial time-domain signal. Add cyclic prefix block 225 then inserts a cyclic prefix to the time-domain signal. Finally, up-converter 230 modulates (i.e., up-converts) the output of add cyclic prefix block 225 to RF frequency for transmission via a wireless channel. The signal may also be filtered at baseband before conversion to RF frequency.

The transmitted RF signal arrives at UE 116 after passing through the wireless channel, and reverse operations to those at BS 102 are performed. Down-converter 255 down-converts the received signal to baseband frequency, and remove cyclic prefix block 260 removes the cyclic prefix to produce the serial time-domain baseband signal. Serial-to-parallel block 265 converts the time-domain baseband signal to parallel time-domain signals. Size N FFT block 270 then performs an FFT algorithm to produce N parallel frequency-domain signals. Parallel-to-serial block 275 converts the parallel frequency-domain signals to a sequence of modulated data symbols. Channel decoding and demodulation block 280 demodulates and then decodes the modulated symbols to recover the original input data stream.

Each of base stations 101-103 may implement a transmit path that is analogous to transmitting in the downlink to user equipment 111-116 and may implement a receive path that is analogous to receiving in the uplink from user equipment 111-116. Similarly, each one of user equipment 111-116 may implement a transmit path corresponding to the architecture for transmitting in the uplink to base stations 101-103 and may implement a receive path corresponding to the architecture for receiving in the downlink from base stations 101-103.

Embodiments of the present disclosure recognize that closely spaced inter-band carrier aggregation is difficult to support using current FE configurations. Accordingly, embodiments of the present disclosure provide RF FE configurations supporting closely spaced high/high or low/low inter-band CA with improved performance and efficiency.

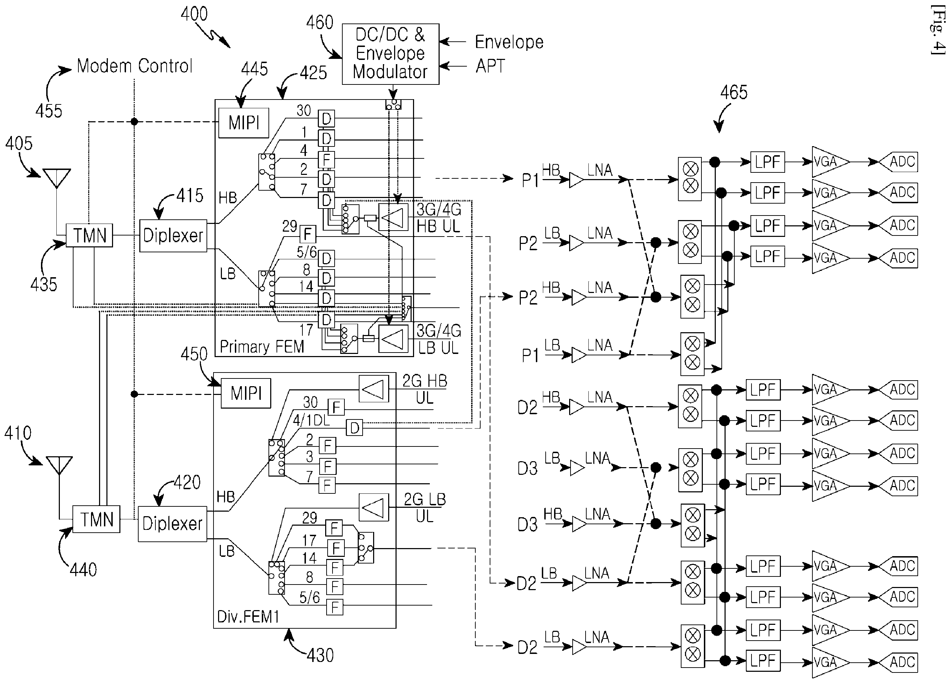

FIGURE 4 illustrates an FE configuration for supporting CA according to an illustrative embodiment of this disclosure. In this illustrative embodiment, FE 400 supports CA through the inclusion of two separate antennas 405 and 410 and two RF front end paths. The FE 400 is at least a portion of a transceiver in a wireless communication device, such as the UEs 111-116 in FIGURE 1.

The FE 400 includes two antennas 405 and 410 operably connected to diplexers 415 and 420, respectively, which are connected to respective front end modules (FEMs) 425 and 430. The diplexers separate and/or filter high and low band frequencies. The high and low band frequencies are two general groupings of frequency bands where each group of bands are relatively close in frequency, but below or above, depending on the designation high or low, the other group of bands in frequency. For example, given current E-UTRA standards, high bands may be at or around and above 1.7 GHz and low bands may be at or around and below 1 GHz. These ranges are for an example illustration only and may include different ranges as frequency band definitions continue to evolve.

Given the differences in frequency between the high and low bands, a relatively simple filter structure for the diplexers can separate or filter the signals carried on the high bands from signals carried on the low bands without significant insertion loss or increase in noise. In this configuration, the FE 400 provides separate antennas and RF front end paths (via diplexers 415 and 420 and front end modules (FEMs) 425 and 430), which provide efficient performance when using closely spaced inter-band CA. For example, two frequency bands may be allocated to a UE for downlink or uplink communication that are close to each other in frequency. Signals received or to be transmitted by the UE can be processed on separate antennas and FE RF paths leading to improvements in efficiency compared with an FE configuration using a quadplexer to separate signals on closely-spaced bands. The FE 400 also supports multiple-input multiple-output (MIMO) communication being, in this configuration, capable of processing signals on four different RF paths, which may be used to receive multiple streams of data for increased bit rate or for diversity to increase receiver sensitivity. For example, FEM 430 may be a diversity FEM for one or more frequency resources allocated to the UE.

FE 400 can include tunable matching networks (TMNs) 435 and 440,which provide impedance matching between the antennas 405 and 410 and elements of the FEMs 425 and 430. The FEMs 425 and 430 may also include mobile industry processor interfaces (MIPIs) 445 and 450, respectively, which may receive control inputs from a controller, such as modem control 455, to control operation and/or programming of the FEMs 425 and 430, to process received or to be transmitted signals on different frequency bands, modes, or for other tuning needs. FE 400 can include an envelope modulator 460 for envelope modulation to improve transmitter efficiency. Receiver processing circuitry 465, which includes an array of low-noise amplifiers (LNAs), mixers, filters, and data converters, which may becommonly embedded in application specific integrated circuits(ASICs),to down convert received analog signals from RF to digital baseband signals for processing by a modem, illustrates the feasibility of interfaces with FE 400. The FEMs 425 and 430 may be fully integrated, partially integrated or non-integrated. For example, the FEMs 425 and 430may be one or more modules including each of the components described in the respective FEMs including, for example, the antennas, TMNs, diplexers and processing circuitry; may include some but not of these components in one or more modules; or may be implemented entirely from discrete components.

In this particular example, the FE 400 is programmed to transmit or receive on band 2 and receive on band 29 via antenna 405 and FEM 425. Itis also programmed to transmit or receive on band 4 and receive on band 29 via antenna 410 and FEM 430. In this example, FE 400 provides efficient CA performance for closely-spaced high bands 2 and 4, while at the same time providing antenna diversity for signals received on low band 29. However, this is one illustrative example, and the embodiments of the present disclosure are not limited to the use of these bands.

FE 400 supports closely spaced inter-band CA in a manner that reduces or minimizes both uplink and downlink losses without customized parts like quadplexers and sup-portstwo-way diversity MIMO or higher MIMO orders by adding antennas and FE RF paths. FE 400 minimizes or reduces space usage and thereby allows better inter-antenna spatial isolation or decoupling for multiple antennas application for MIMO. In one embodiment, the FE 400 includes 3G/4G power amplifiers (PA) integrated in the primary FEM 425, and 2G power amplifiers integrated in diversity FEM 430. In another embodiment, the FE 400 includes 2G/3G/4G Multi-mode Multi-band (MMMB) power amplifiers (PA) integrated in the primary FEM 425 with a 2G uplink path routed from primary FEM 425 to diversity FEM 430 and antenna 410. In various embodiments, time division (TD) uplink operations may be routed through diversity FEM 430 with the primary FEM 425 supporting Full Duplex (FD) only modes for purpose of increasing or maximizing efficiency of TD modes. Additionally, one of the closely spaced FD inter-band carriers for CA designated for the single uplink may be routed to the diversity FEM 430. In this manner, during non-CA operations, this chosen band would have the primary path supported by diversity FEM 430 as well, and if so chosen, supports diversity path with primary FEM 425.

This example is illustrated in FIGURE 4 where band 4 is such a chosen band. During CA mode, signals received on a closely spaced inter-band, for example, band 2,in downlink communication are processed at primary FEM 425, and band 4 downlink communications are processed at diversity FEM 430. The inter-band carriers of both bands 2 and 4 arrive at both antennas and are processed by the individual dedicated FEM, such as done for a single carrier. In this configuration, FE 400 transmits signals on band 4, if selected as the single uplink band, using diversity FEM 430 and antenna 410. FE 400 transmits signals on band 2, if selected as the single uplink, using primary FEM 425 and antenna 405. For two-way MIMO for inter-band CA,including single band four-way diversity requiring four antennas, two additional FEMs (not shown in FIGURE 4) connected to respective antennas may be included in FE 400 to provide the diversity path for each of the closely spaced inter-bands, bands 2 and 4,for example. In this manner, the inter-band CA supported by FE 400 is scalable based on the number of bands used and the diversity requirements.

In this embodiment, FE 400 does not need to include any quadplexers that would otherwise be necessary if inter-band is supported through a single antenna and FEM. In these embodiments, FE 400 includes diplexers 415 and 420, which result in lower insertion loss and better isolation. Since the number of antennas may be dictated by the maximum order of 4 or higher diversity or MIMO, FE 400 may not require any additional antennas or FE components. Therefore, the FE configuration of this illustrative embodiment achieves the target of better efficiency and performance without additional costs.

The illustration of FE 400 in FIGURE 4 is an example of the various embodiments that may be implemented in accordance with the teachings of the present disclosure and should not be construed as being limited by the depicted FE configuration. The FE configuration avoids using quadplexers or larger-order similar filtering technologies to support closely spaced inter-band CA.

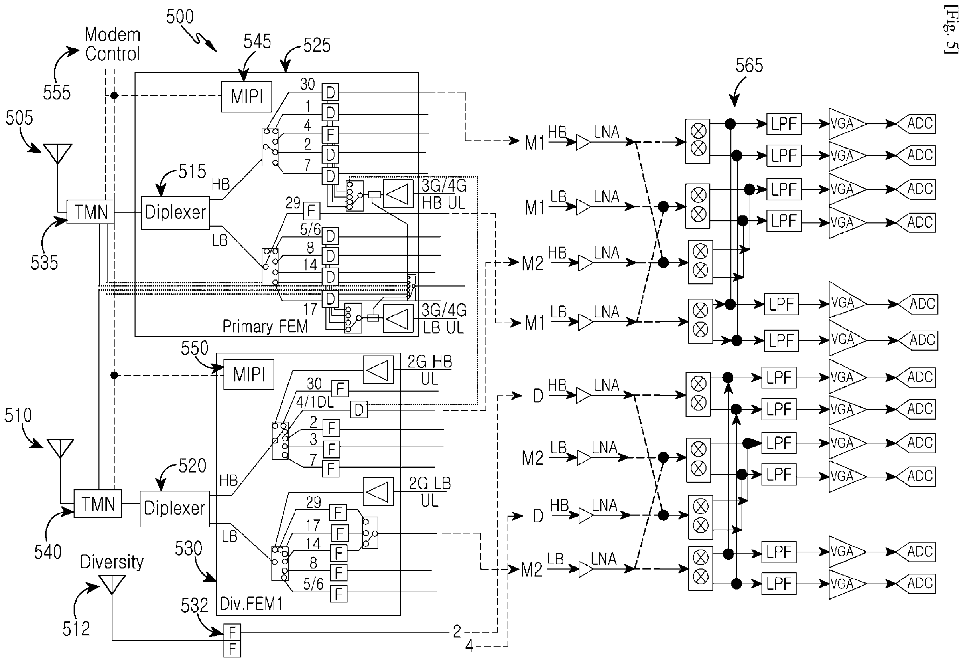

FIGURE 5 illustrates another FE configuration for supporting CA according to an illustrative embodiment of this disclosure.In this illustrative embodiment, FE 500 supports CA through the inclusion of three separate antennas 505, 510, and 512 and two RF front end paths.FE 500 includes a third high-band only (or low band only) diversity antenna to provide full antenna diversity without the need for a quadplexer to support closely spaced high/high (or low/low) inter-band CA with MIMO in the case when order of diversity or MIMO is limited to 2. In this embodiment, the FE 500 is at least a portion of a transceiver in a wireless communication device, such as the UEs 111-116 in FIGURE 1.

Similar to FE 400 in FIGURE 4, the FE 500 includes two primary antennas 505 and 510 operably connected to diplexers 515 and 520, respectively, which are connected to respective front end modules (FEMs) 525 and 530. The diplexers separate and/or filter high and low band frequencies as discussed above. Given the differences in frequency between the high and low bands, a relatively simple filter structure for the diplexers can separate or filter the signals carried on the high bands from signals carried on the low bands without significant insertion loss or increase in noise.

In this configuration, the FE 500 provides separate antennas and RF front end paths (via diplexers 515 and 520 and front end modules (FEMs) 525 and 530) which provide efficient performance when using closely spaced inter-band CA. For example, three frequency bands may be allocated to a UE for downlink communication, where two of these bands are close to each other in frequency. Signals received by the UE on the two closely spaced bands can be processed on separate antennas and FE RF paths leading to improvements in efficiency compared with an FE configuration using a quadplexer to separate signals on closely spaced bands.

For two way MIMO for such inter-band CA, the FE 500 also includes a third antenna 512 for downlink antenna diversity that is operably connected to a multi-band filter block 532. This multi-band filter block 532 passes both similarly grouped (e.g., both high bands or both low bands) (e.g., band 2 and band 4) simultaneously. Multi-band filter block 532 includes downlink filters, which, unlike quadplexers, have better frequency guard spacing between the pass bands and much less stringent isolation requirements,because there is no uplink signal filtering. As a result, the losses are lower than even would likely be with the use of a duplexer.

FE 500 can include tunable matching networks (TMNs) 535 and 540,which provide impedance matching between the antennas 505 and 510 and elements of the FEMs 525 and 530. The FEMs 525 and 530 may also include mobile industry processor interfaces (MIPIs) 545 and 550, respectively, which may receive control inputs from a controller, such as modem control 555, to control operation and/or programming of the FEMs 525 and 530, to process received or to be transmitted signals on different frequency bands, modes, or for other tuning needs. Receiver processing circuitry 565 includes an array of LNAs, mixers, filters, and data converters, which may becommonly embedded in ASICs, to down convert received analog signals (e.g., signals received via one or more of antennas 505, 510, and 512) from RF to digital baseband signals for processing by a modem to illustrate the feasibility of interfaces with FE 500. The FEMs 425 and 430 may be fully integrated, partially integrated or non-integrated. For example, the FEMs 425 and 430may be one or more modules including each of the components described in the respective FEMs including, for example, the antennas, TMNs, diplexers and processing circuitry; may include some but not of these components in one or more modules; or may be implemented entirely from discrete components.

FE 500 supports closely spaced inter-band CA without the need to use quadplexers that would otherwise be necessary if such inter-band is supported through a single antenna and FEM.FE 500 uses diplexers 515 and 520 that have lower insertion loss and better isolation when compared with a quadplexer. The components added to support antenna 512 is physically much smaller than that for the main antenna, because the antenna 512 is used for reception and uses the same receiver processing circuitry 565 that would be required for the order of CA and MIMO to support. Additionally, in embodiments where the antenna 512 supports only high band diversity (e.g., bands 2 and 4 as illustrated), the antenna is physically smaller than the antennas 505 and 510 as a result of the smaller waveforms associated with higher frequency signals. These small additions help alleviate the device space restrictionscommonly caused by adding antennas.

The illustration of FE 500 in FIGURE 5 is an example of the various embodiments that may be implemented in accordance with the teachings of the present disclosure and should not be construed as being limited by the depicted FE configuration. For example, bands other than 2 and 4 may be used for CA. The antenna 512 may be configured to support closely spaced low band CA, e.g., bands 5 and 17.

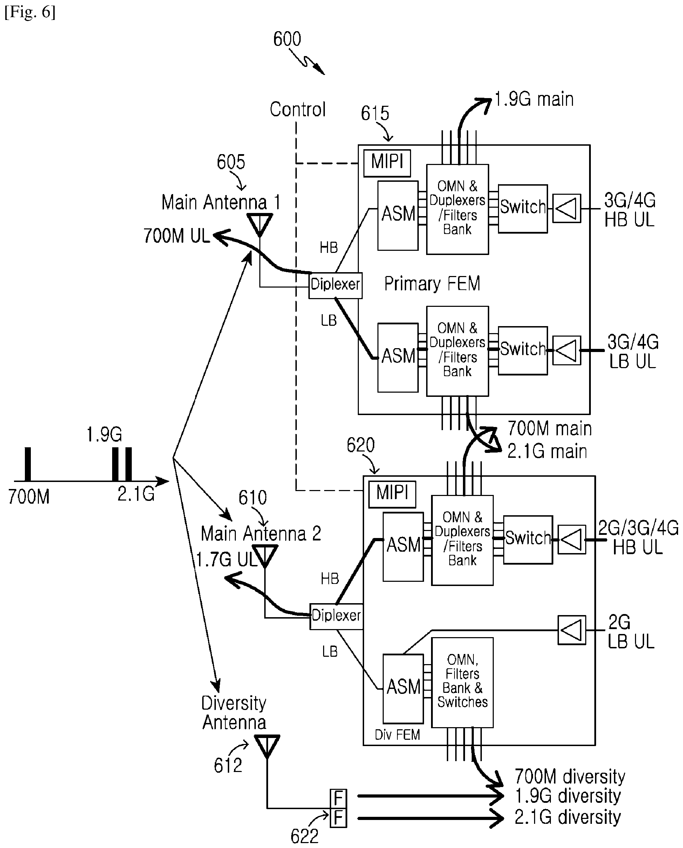

FIGURE 6 illustrates an example of wireless communication using closely spaced inter-band CA according to an illustrative embodiment of this disclosure.In this illustrative embodiment, FE 600 supports three component carrier CA downlink communication with antenna diversity using three antennas 605, 610, and 612 and an example of one implementation of FE 500 in FIGURE 5. In this example, a base station, e.g., one or more of BS 101-103, transmits signals using component carriers located at 700MHz, 1.9GHz, and 2.1GHz. During downlink reception, FE 600 receives and processes the signals transmitted on the 700MHz and 1.9GHz carriers using antenna 605 and FEM 615; the signals transmitted on the 700MHz and 2.1GHz carriers using antenna 610 and FEM 620; and the signals transmitted on the 1.9GHz and 2.1GHz carriers using antenna 612 and multi-band filter block 622. In this example, antennas 605 and 610 and FEMs 615 and 620 provide primary signal reception for the signals transmitted on three carriers used in CA, while antennas 610 and 612, FEM 620, and multi-band filter block 622 provide diversity for the carriers used in CA. During uplink communication, FE 600 transmits signals on the 700MHz and 1.7GHz carriers using antennas 605 and 610, respectively, or transmits signals on the 1.8GHz and 1.7GHz carriers using antennas 605 and 610, respectively, for example.These illustration configuration examples of the present disclosure are not limited to the use of these bands and combinations.

By using separate antennas and RF paths for the closely spaced carriers used in CA, FE 600 provides efficient performance with reduced or minimal insertion loss at the FE and increased receiver sensitivity. Additionally, because the third antenna 612 includes little additional circuitry, and in embodiments of closely spaced high band carriers may be a small antenna compared to the other antennas 605 and 610, the inclusion of the third antenna 612 for diversity imposes minimal or minor additional requirements on board space and form factor while providing significant advantages in terms of minimizing or reducing loss and optimizing or improving efficiency of RF Frontend for bands/modes, MIMO, and CA combinations requirements. The illustration does not limit leveraging antennas exist for other features to perform as this third antenna 612.

The example embodiment illustrated in FIGURE 6 is an example of the various embodiments that may be implemented in accordance with the teachings of the present disclosure and should not be construed as being limited by the depicted FE configuration. For example, different numbers of component carriers and different frequencies of the component carriers may be used. For example, FE 600 is a scalable configuration, and more than three component carriers for CA may be supported in the downlink or uplink. Additionally, the closely spaced component carriers may be both low band, and antenna 612 may be configured to provide antenna diversity for signals transmitted on these low bands.

Although the present disclosure has been described with an exemplary embodiment. The present invention is defined and limited only by the scope of the appended claims.

## Claims

1. An apparatus (500) comprising:
a first antenna (505) configured to transmit or receive signals in both a first high frequency band and a first low frequency band;
a second antenna (510) configured to transmit or receive signals in both a second high frequency band and a second low frequency band;
a third antenna (512) configured to receive signals in both the first and second high frequency bands or both the first and second low frequency bands; and
a multiband filter (532) configured to filter the signals received by the third antenna,
wherein at least one of (i) the first high frequency band and the second high frequency band or (ii) the first low frequency band and the second low frequency band are different frequency bands for carrier aggregation.

2. The apparatus of Claim 1, further comprising:
a first diplexer (515) operably connected to the first antenna, the first diplexer configured to filter a first signal received or to be transmitted on the first high frequency band from a second signal received or to be transmitted on the first low frequency band; and
a first front end module, FEM, operably connected to the first diplexer, the first FEM configured to process the first and second received or to be transmitted signals.

3. The apparatus of Claim 2, further comprising:
a second diplexer (520) operably connected to the second antenna, the second diplexer configured to filter a third signal received or to be transmitted on the second high frequency band from a fourth signal received or to be transmitted on the second low frequency band; and
a diversity FEM operably connected to the second diplexer, the first FEM configured to process the third and fourth received or to be transmitted signals.

4. A method for supporting carrier aggregation, the method comprising:
transmitting or receiving, using a first antenna (505) signals in both a first high frequency band and a first low frequency band;
transmitting or receiving, using a second antenna (510), signals in both a second high frequency band and a second low frequency band;
receiving, using a third antenna (512), signals in both the first and second high frequency bands or both the first and second low frequency bands; and
filtering, using a multiband filter (532) operably connected to the third antenna, the signals received by the third antenna,
wherein at least one of (i) the first high frequency band and the second high frequency band or (ii) the first low frequency band and the second low frequency band are different frequency bands for carrier aggregation.

5. The method of Claim 4, further comprising:
filtering, using a first diplexer (515) operably connected to the first antenna, a first signal received or to be transmitted on the first high frequency band from a second signal received or to be transmitted on the first low frequency band; and
processing, using a first front end module, FEM, operably connected to the first diplexer, the first and second received or to be transmitted signals.

6. The method of Claim 5, further comprising:
filtering, using a second diplexer (520) operably connected to the second antenna, a third signal received or to be transmitted on the second high frequency band from a fourth signal received or to be transmitted on the second low frequency band; and
processing, using a diversity FEM operably connected to the second diplexer, the third and fourth received or to be transmitted signals.

7. The method of Claim 6, wherein the method is performed by an apparatus configured to support closely spaced inter-band downlink carrier aggregation without use of a quadplexer in either of the FEMs.

8. A user equipment, UE (111-116), capable of supporting downlink carrier aggregation, the UE comprising:
a first antenna (505) configured to receive signals in both a first high frequency band and a first low frequency band;
a second antenna (510) configured to receive signals in both a second high frequency band and a second low frequency band;
a third antenna (512) configured to receive signals in both the first and second high frequency bands or both the first and second low frequency bands; and
a multiband filter (532) configured to filter the signals received by the third antenna,
wherein at least one of (i) the first high frequency band and the second high frequency band or (ii) the first low frequency band and the second low frequency band are different frequency bands for downlink carrier aggregation.

9. The apparatus of Claim 1 or the method of Claim 4 or the UE of Claim 8, wherein the third antenna is a high band diversity antenna configured to receive signals both the first and second high frequency bands.

10. The apparatus of Claim 1 or the method of Claim 4 or the UE of Claim 8, wherein the third antenna is a low band diversity antenna configured to receive signals both the first and second low frequency bands.

11. The UE of Claim 8, further comprising:
a first diplexer (515) operably connected to the first antenna, the first diplexer configured to filter a first signal received on the first high frequency band from a second signal received on the first low frequency band; and
a first front end module, FEM, operably connected to the first diplexer, the first FEM configured to process the first and second received signals.

12. The UE of Claim 11, further comprising:
a second diplexer (520) operably connected to the second antenna, the second diplexer configured to filter a third signal received on the second high frequency band from a fourth signal received on the second low frequency band; and
a diversity FEM operably connected to the second diplexer, the first FEM configured to process the third and fourth received signals.

13. The apparatus of Claim 3 or the UE of Claim 12, wherein the apparatus or the UE is located in a mobile station and configured to support closely spaced inter-band downlink carrier aggregation without use of a quadplexer in either of the FEMs.

## Patentansprüche

1. Eine Vorrichtung (500), die Folgendes umfasst:
eine erste Antenne (505), die eingerichtet ist, um Signale in sowohl einem ersten Hochfrequenzband als auch einem ersten Niederfrequenzband zu übertragen oder zu empfangen;
eine zweite Antenne (510), die eingerichtet ist, um Signale in sowohl einem zweiten Hochfrequenzband als auch einem zweiten Niederfrequenzband zu übertragen oder zu empfangen;
eine dritte Antenne (512), die eingerichtet ist, um Signale in sowohl dem ersten als auch dem zweiten Hochfrequenzband oder in sowohl dem ersten als auch dem zweiten Niederfrequenzband zu empfangen; und
einen Mehrbandfilter (532), der eingerichtet ist, um die von der dritten Antenne empfangenen Signale zu filtern,
wobei es sich zumindest bei (i) dem ersten Hochfrequenzband und/oder dem zweiten Hochfrequenzband oder (ii) dem ersten Niederfrequenzband und/oder dem zweiten Niederfrequenzband um unterschiedliche Frequenzbänder zur Trägeraggregation handelt.

2. Die Vorrichtung nach Anspruch 1, die weiter Folgendes umfasst:
einen ersten Diplexer (515), der operativ mit der ersten Antenne verbunden ist, wobei der erste Diplexer eingerichtet ist, um ein auf dem ersten Hochfrequenzband empfangenes oder zu übertragendes erstes Signal aus einem auf dem ersten Niederfrequenzband empfangenen oder zu übertragenden zweiten Signal zu filtern; und
ein erstes Frontendmodul (FEM), das operativ mit dem ersten Diplexer verbunden ist, wobei das erste FEM eingerichtet ist, um das empfangene oder zu übertragende erste und zweite Signal zu verarbeiten.

3. Die Vorrichtung nach Anspruch 2, die weiter Folgendes umfasst:
einen zweiten Diplexer (520), der operativ mit der zweiten Antenne verbunden ist, wobei der zweite Diplexer eingerichtet ist, um ein auf dem zweiten Hochfrequenzband empfangenes oder zu übertragendes drittes Signal aus einem auf dem zweiten Niederfrequenzband empfangenen oder zu übertragenden vierten Signal zu filtern; und
ein Diversitäts-FEM, das operativ mit dem zweiten Diplexer verbunden ist, wobei das erste FEM eingerichtet ist, um das empfangene oder zu übertragende dritte und vierte Signal zu verarbeiten.

4. Ein Verfahren zur Unterstützung von Trägeraggregation, wobei das Verfahren Folgendes umfasst:
Übertragen oder Empfangen von Signalen in sowohl einem ersten Hochfrequenzband als auch einem ersten Niederfrequenzband mittels einer ersten Antenne (505);
Übertragen oder Empfangen von Signalen in sowohl einem zweiten Hochfrequenzband als auch einem zweiten Niederfrequenzband mittels einer zweiten Antenne (510);
Empfangen von Signalen in sowohl dem ersten als auch dem zweiten Hochfrequenzband oder in sowohl dem ersten als auch dem zweiten Niederfrequenzband mittels einer dritten Antenne (512); und
Filtern der von der dritten Antenne empfangenen Signale mittels eines Mehrbandfilters (532), der operativ mit der dritten Antenne verbunden ist,
wobei es sich zumindest bei (i) dem ersten Hochfrequenzband und/oder dem zweiten Hochfrequenzband oder (ii) dem ersten Niederfrequenzband und/oder dem zweiten Niederfrequenzband um unterschiedliche Frequenzbänder zur Trägeraggregation handelt.

5. Das Verfahren nach Anspruch 4, das weiter Folgendes umfasst:
Filtern eines auf dem ersten Hochfrequenzband empfangenen oder zu übertragenden ersten Signals aus einem auf dem ersten Niederfrequenzband empfangenen oder zu übertragenden zweiten Signal mittels eines ersten Diplexers (515), der operativ mit der ersten Antenne verbunden ist; und
Verarbeiten des empfangenen oder zu übertragenden ersten und zweiten Signals mittels eines ersten Frontendmoduls (FEM), das operativ mit dem ersten Diplexer verbunden ist.

6. Das Verfahren nach Anspruch 5, das weiter Folgendes umfasst:
Filtern eines auf dem zweiten Hochfrequenzband empfangenen oder zu übertragenden dritten Signals aus einem auf dem zweiten Niederfrequenzband empfangenen oder zu übertragenden vierten Signal mittels eines zweiten Diplexers (520), der operativ mit der zweiten Antenne verbunden ist; und
Verarbeiten des empfangenen oder zu übertragenden dritten und vierten Signals mittels eines Diversitäts-FEM, das operativ mit dem zweiten Diplexer verbunden ist.

7. Das Verfahren nach Anspruch 6, wobei das Verfahren durch eine Vorrichtung durchgeführt wird, die eingerichtet ist, um die Abwärtsstrecken-Trägeraggregation nah beieinander liegender Zwischenbänder zu unterstützen, ohne einen Quadplexer in den FEM zu verwenden.

8. Ein Benutzergerät (111-116) mit Funktion zur Unterstützung von Abwärtsstrecken-Trägeraggregation, wobei das Benutzergerät Folgendes umfasst:
eine erste Antenne (505), die eingerichtet ist, um Signale in sowohl einem ersten Hochfrequenzband als auch einem ersten Niederfrequenzband zu empfangen;
eine zweite Antenne (510), die eingerichtet ist, um Signale in sowohl einem zweiten Hochfrequenzband als auch einem zweiten Niederfrequenzband zu empfangen;
eine dritte Antenne (512), die eingerichtet ist, um Signale in sowohl dem ersten als auch dem zweiten Hochfrequenzband oder in sowohl dem ersten als auch dem zweiten Niederfrequenzband zu empfangen; und
einen Mehrbandfilter (532), der eingerichtet ist, um die von der dritten Antenne empfangenen Signale zu filtern,
wobei es sich zumindest bei (i) dem ersten Hochfrequenzband und/oder dem zweiten Hochfrequenzband oder (ii) dem ersten Niederfrequenzband und/oder dem zweiten Niederfrequenzband um unterschiedliche Frequenzbänder zur Abwärtsstrecken-Trägeraggregation handelt.

9. Die Vorrichtung nach Anspruch 1 oder das Verfahren nach Anspruch 4 oder das Benutzergerät nach Anspruch 8, wobei es sich bei der dritten Antenne um eine Hochband-Diversitätsantenne handelt, die eingerichtet ist, um Signale sowohl dem ersten als auch dem zweiten Hochfrequenzband zu empfangen.

10. Die Vorrichtung nach Anspruch 1 oder das Verfahren nach Anspruch 4 oder das Benutzergerät nach Anspruch 8, wobei es sich bei der dritten Antenne um eine Niederband-Diversitätsantenne handelt, die eingerichtet ist, um Signale sowohl dem ersten als auch dem zweiten Niederfrequenzband zu empfangen.

11. Das Benutzergerät nach Anspruch 8, das weiter Folgendes umfasst:
einen ersten Diplexer (515), der operativ mit der ersten Antenne verbunden ist, wobei der erste Diplexer eingerichtet ist, um ein auf dem ersten Hochfrequenzband empfangenes erstes Signal aus einem auf dem ersten Niederfrequenzband empfangenen zweiten Signal zu filtern; und
ein erstes Frontendmodul (FEM), das operativ mit dem ersten Diplexer verbunden ist, wobei das erste FEM eingerichtet ist, um das empfangene erste und zweite Signal zu verarbeiten.

12. Das Benutzergerät nach Anspruch 11, das weiter Folgendes umfasst:
einen zweiten Diplexer (520), der operativ mit der zweiten Antenne verbunden ist, wobei der zweite Diplexer eingerichtet ist, um ein auf dem zweiten Hochfrequenzband empfangenes drittes Signal aus einem auf dem zweiten Niederfrequenzband empfangenen vierten Signal zu filtern; und
ein Diversitäts-FEM, das operativ mit dem zweiten Diplexer verbunden ist, wobei das erste FEM eingerichtet ist, um das empfangene dritte und vierte Signal zu verarbeiten.

13. Die Vorrichtung nach Anspruch 3 oder das Benutzergerät nach Anspruch 12, wobei sich die Vorrichtung oder das Benutzergerät in einer Mobilstation befindet und eingerichtet ist, um die Abwärtsstrecken-Trägeraggregation nah beieinander liegender Zwischenbänder zu unterstützen, ohne einen Quadplexer in den FEM zu verwenden.

## Revendications

1. Un appareil (500) comprenant :
une première antenne (505) configurée de façon à émettre ou recevoir des signaux dans à la fois une première bande à hautes fréquences et une première bande à basses fréquences,
une deuxième antenne (510) configurée de façon à émettre ou recevoir des signaux dans à la fois une deuxième bande à hautes fréquences et une deuxième bande à basses fréquences,
une troisième antenne (512) configurée de façon à recevoir des signaux dans à la fois les première et deuxième bandes à hautes fréquences ou à la fois les première et deuxième bandes à basses fréquences, et
un filtre multibande (532) configuré de façon à filtrer les signaux reçus par la troisième antenne,
où au moins une bande parmi (i) la première bande à hautes fréquences et la deuxième bande à hautes fréquences ou (ii) la première bande à basses fréquences et la deuxième bande à basses fréquences sont des bandes de fréquences différentes pour une agrégation de porteuses.

2. L'appareil selon la Revendication 1, comprenant en outre :
un premier diplexeur (515) raccordé de manière opérationnelle à la première antenne, le premier diplexeur étant configuré de façon à filtrer un premier signal reçu ou à transmettre sur la première bande à hautes fréquences à partir d'un deuxième signal reçu ou à transmettre sur la première bande à basses fréquences, et
un premier module d'extrémité avant, FEM, raccordé de manière opérationnelle au premier diplexeur, le premier FEM étant configuré de façon à traiter les premier et deuxième signaux reçus ou à transmettre.

3. L'appareil selon la Revendication 2, comprenant en outre :
un deuxième diplexeur (520) raccordé de manière opérationnelle à la deuxième antenne, le deuxième diplexeur étant configuré de façon à filtrer un troisième signal reçu ou à transmettre sur la deuxième bande à hautes fréquences à partir d'un quatrième signal reçu ou à transmettre sur la deuxième bande à basses fréquences, et
un FEM de diversité raccordé de manière opérationnelle au deuxième diplexeur, le premier FEM étant configuré de façon à traiter les troisième et quatrième signaux reçus ou à transmettre.

4. Un procédé de prise en charge d'une agrégation de porteuses, le procédé comprenant :
la transmission ou la réception, au moyen d'une première antenne (505), de signaux dans à la fois une première bande à hautes fréquences et une première bande à basses fréquences,
la transmission ou la réception, au moyen d'une deuxième antenne (510), de signaux dans à la fois une deuxième bande à hautes fréquences et une deuxième bande à basses fréquences,
la réception, au moyen d'une troisième antenne (512), de signaux dans à la fois les première et deuxième bandes à hautes fréquences ou à la fois les première et deuxième bandes à basses fréquences, et
le filtrage, au moyen d'un filtre multibande (532) raccordé de manière opérationnelle à la troisième antenne, des signaux reçus par la troisième antenne,
où au moins une bande parmi (i) la première bande à hautes fréquences et la deuxième bande à hautes fréquences ou (ii) la première bande à basses fréquences et la deuxième bande à basses fréquences sont des bandes de fréquences différentes pour une agrégation de porteuses.

5. Le procédé selon la Revendication 4, comprenant en outre :
le filtrage, au moyen d'un premier diplexeur (515) raccordé de manière opérationnelle à la première antenne, d'un premier signal reçu ou à transmettre sur la première bande à hautes fréquences à partir d'un deuxième signal reçu ou à transmettre sur la première bande à basses fréquences, et
le traitement, au moyen d'un premier module d'extrémité avant, FEM, raccordé de manière opérationnelle au premier diplexeur, des premier et deuxième signaux reçus ou à transmettre.

6. Le procédé selon la Revendication 5, comprenant en outre :
le filtrage, au moyen d'un deuxième diplexeur (520) raccordé de manière opérationnelle à la deuxième antenne, d'un troisième signal reçu ou à transmettre sur la deuxième bande à hautes fréquences à partir d'un quatrième signal reçu ou à transmettre sur la deuxième bande à basses fréquences, et
le traitement, au moyen d'un FEM de diversité raccordé de manière opérationnelle au deuxième diplexeur, des troisième et quatrième signaux reçus ou à transmettre.

7. Le procédé selon la Revendication 6, où le procédé est exécuté par un appareil configuré de façon à prendre en charge une agrégation de porteuses en liaison descendante inter-bandes étroitement espacée sans l'utilisation d'un quadplexeur dans l'un des FEM.

8. Un équipement d'utilisateur, UE (111-116), capable de prendre en charge une agrégation de porteuses en liaison descendante, l'UE comprenant :
une première antenne (505) configurée de façon à recevoir des signaux dans à la fois une première bande à hautes fréquences et une première bande à basses fréquences,
une deuxième antenne (510) configurée de façon à recevoir des signaux dans à la fois une deuxième bande à hautes fréquences et une deuxième bande à basses fréquences,
une troisième antenne (512) configurée de façon à recevoir des signaux dans à la fois les première et deuxième bandes à hautes fréquences ou à la fois les première et deuxième bandes à basses fréquences, et
un filtre multibande (532) configuré de façon à filtrer les signaux reçus par la troisième antenne,
où au moins une bande parmi (i) la première bande à hautes fréquences et la deuxième bande à hautes fréquences ou (ii) la première bande à basses fréquences et la deuxième bande à basses fréquences sont des bandes de fréquences différentes pour une agrégation de porteuses en liaison descendante.

9. L'appareil selon la Revendication 1 ou le procédé selon la Revendication 4 ou l'UE selon la Revendication 8, où la troisième antenne est une antenne de diversité de bande haute configurée de façon à recevoir des signaux à la fois des première et deuxième bandes à hautes fréquences.

10. L'appareil selon la Revendication 1 ou le procédé selon la Revendication 4 ou l'UE selon la Revendication 8, où la troisième antenne est une antenne de diversité de bande basse configurée de façon à recevoir des signaux à la fois des première et deuxième bandes à basses fréquences.

11. L'UE selon la Revendication 8, comprenant en outre :
un premier diplexeur (515) raccordé de manière opérationnelle à la première antenne, le premier diplexeur étant configuré de façon à filtrer un premier signal reçu sur la première bande à hautes fréquences à partir d'un deuxième signal reçu sur la première bande à basses fréquences, et
un premier module d'extrémité avant, FEM, raccordé de manière opérationnelle au premier diplexeur, le premier FEM étant configuré de façon à traiter les premier et deuxième signaux reçus.

12. L'UE selon la Revendication 11, comprenant en outre :
un deuxième diplexeur (520) raccordé de manière opérationnelle à la deuxième antenne, le deuxième diplexeur étant configuré de façon à filtrer un troisième signal reçu sur la deuxième bande à hautes fréquences à partir d'un quatrième signal reçu sur la deuxième bande à basses fréquences, et
un FEM de diversité raccordé de manière opérationnelle au deuxième diplexeur, le premier FEM étant configuré de façon à traiter les troisième et quatrième signaux reçus.

13. L'appareil selon la Revendication 3 ou l'UE selon la Revendication 12, où l'appareil ou l'UE est installé dans une station mobile et configuré de façon à prendre en charge une agrégation de porteuses en liaison descendante inter-bandes étroitement espacée sans l'utilisation d'un quadplexeur dans l'un des FEM.
